(19) Europäisches Patentamt
European Patent Office
Office européen des brevets

(11) **EP 4 152 181 A1**

(12) **EUROPEAN PATENT APPLICATION**
published in accordance with Art. 153(4) EPC

(43) Date of publication:
**22.03.2023 Bulletin 2023/12**

(21) Application number: **20934943.0**

(22) Date of filing: **13.05.2020**

(51) International Patent Classification (IPC):
***G06F 21/32*** *(2013.01)*

(52) Cooperative Patent Classification (CPC):
**G06F 21/32**

(86) International application number:
**PCT/JP2020/019108**

(87) International publication number:
**WO 2021/229717 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **HAMA, Soichi
Kawasaki-shi, Kanagawa 211-8588 (JP)**
• **AOKI, Takahiro
Kawasaki-shi, Kanagawa 211-8588 (JP)**
• **UCHIDA, Hidetsugu
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **AUTHENTICATION METHOD, AUTHENTICATION PROGRAM, AND INFORMATION PROCESSING DEVICE**

(57) In an authentication method, a computer executes a process including: obtaining a captured image captured by a camera; selecting one facial image from a plurality of facial images based on a position of each of the plurality of facial images included in the obtained captured image in the captured image; referring to a storage unit that stores pieces of biometric information associated with the respective plurality of facial images and specifying a piece of the biometric information associated with a facial image in which a degree of similarity to the selected facial image satisfies a criterion; and performing, when biometric information detected by a sensor is received, authentication based on verification of the specified piece of the biometric information against the received biometric information.

FIG. 3A

FIG. 3B
SHOOTING ANGLE OF VIEW
VISIBLE RANGE

FIG. 3C
VISIBLE RANGE
FACE A
FACE B
FACE C

FIG. 3D

| VISIBLE RANGE | |
| --- | --- |
| VERTICAL RANGE (%) | HORIZONTAL RANGE (%) |
| Y1(>0) TO Y2(<100) | X1(>0) TO X2(<100) |

FIG. 3E
VISIBLE RANGE
FACE B
USER

EP 4 152 181 A1

# Description

FIELD

The present case relates to an authentication method, an authentication program, and an information processing apparatus.

BACKGROUND

There has been disclosed a biometric authentication technique of narrowing down candidates by authentication using first biometric information (e.g., facial features) and authenticating a person in question by authentication using second biometric information (e.g., palm venous features) (e.g., see Patent Document 1).

CITATION LIST

PATENT DOCUMENT

Patent Document 1: Japanese Laid-open Patent Publication No. 2019-128880

SUMMARY

[TECHNICAL PROBLEM]

However, a plurality of faces may be imaged simultaneously depending on an installation condition of a camera and a usage condition of a user. In this case, the number of candidates to be narrowed down increases, which may increase the authentication time. When the narrowing-down rate is increased to reduce the number of candidates, the processing time for the face authentication may increase, which may cause a missing candidate (correct person may not be included in the narrowing-down list) depending on the accuracy of the face authentication.

In one aspect, it is an object of the present invention to provide an authentication method, an authentication program, and an information processing apparatus capable of shortening an authentication time.

[SOLUTION TO PROBLEM]

In one aspect, according to an authentication method, a computer executes a process including: obtaining a captured image captured by a camera; selecting one facial image from a plurality of facial images based on a position of each of the plurality of facial images included in the obtained captured image in the captured image; referring to a storage unit that stores pieces of biometric information associated with the respective plurality of facial images and specifying a piece of the biometric information associated with a facial image in which a degree of similarity to the selected facial image satisfies a criterion; and performing, when biometric information detected by a sensor is received, authentication based on verification of the specified piece of the biometric information against the received biometric information.

In another aspect, according to an authentication method, in an authentication method that executes authentication based on verification of registered pieces of biometric information against biometric information detected by a sensor, a computer executes a process of determining, in a case where a captured image captured by a camera includes a facial image, whether or not to use, among the registered pieces of biometric information, a piece of the biometric information associated with a facial image in which a degree of similarity to the facial image satisfies a criterion as a target of the verification against the detected biometric information based on a position of the facial image in the captured image.

In another aspect, according to an authentication method, a computer executes a process including: obtaining a captured image captured by a camera; in a case where the obtained captured image includes a plurality of facial images, selecting one facial image from the plurality of facial images based on a display position of operation information on a display unit that displays the operation information related to authentication; and performing the authentication using the selected facial image.

According to an aspect of the embodiments, an authentication method for a computer to execute a process includes obtaining a captured image captured by a camera; selecting one facial image from a plurality of facial images based on a position of each of the plurality of facial images included in the captured image; refers to a storage unit that stores pieces of biometric information associated with the respective plurality of facial images and specifies a piece of the biometric information associated with a facial image in which a degree of similarity to the selected facial image satisfies a criterion; and performs, when biometric information detected by a sensor is received, authentication based on verification of the specified piece of the biometric information against the received biometric information.

[ADVANTAGEOUS EFFECTS OF INVENTION]

It becomes possible to shorten an authentication time.

BRIEF DESCRIPTION OF DRAWINGS

FIG. 1A is a block diagram exemplifying an overall configuration of an information processing apparatus, and FIG. 1B is a block diagram exemplifying a hardware configuration of the information processing apparatus;
FIG. 2 is a diagram exemplifying a table stored in a storage unit;

FIGs. 3A and 3B are diagrams exemplifying an installation location of a face imaging camera, FIG. 3C is a diagram exemplifying a visible range, FIG. 3D is a diagram exemplifying information regarding the visible range stored in the storage unit, and FIG. 3E is a diagram exemplifying positional deviation of a facial image;

FIG. 4 is a flowchart illustrating an exemplary process of the information processing apparatus;

FIGs. 5A to 5C are diagrams exemplifying a relationship between a shooting angle of view and the visible range;

FIGs. 6A and 6B are diagrams exemplifying a case where a screen is partially subject to visibility restriction.

FIG. 7 is a diagram exemplifying a case where the visible range is provided in other directions; and

FIG. 8 is a diagram exemplifying a case where a position of operation information is specified and displayed on a screen of a display device.

DESCRIPTION OF EMBODIMENTS

Prior to descriptions of embodiments, multi-biometric authentication that narrows down a search set by a first modality and identifies a user by another modality will be described.

Biometric authentication is a technique for verifying a person in question using biometric features such as fingerprints, faces, veins, and the like. In the biometric authentication, biometric information for verification obtained by a sensor is compared (verified) with registered biometric information registered in advance in a situation where confirmation is needed, and it is determined whether or not a degree of similarity is equal to or higher than an identity determination threshold value, thereby confirming the identity.

The biometric authentication is utilized in various fields such as bank automated teller machines (ATMs), entry/exit management, and the like, and particularly in recent years, it has begun to be utilized for cashless payment in supermarkets, convenience stores, and the like.

The biometric authentication includes 1:1 authentication that confirms matching with registered biometric information specified by an ID, a card, or the like, and 1:N authentication that searches multiple pieces of registered biometric information for matching registered biometric information. In stores or the like, 1:N authentication is often preferred from a viewpoint of convenience. However, the biometric information has variations depending on the acquisition condition and the like, which may increase the possibility of erroneous verification as the number of pieces of registered biometric information to be searched increases. In view of the above, operations such as executing 1:N authentication after narrowing down the search set with a simple personal identification number (PIN) code or the like to make it sufficiently small have been performed. How small it needs to be to reach a practical level depends on a method of the biometric authentication. However, PIN code input impairs the convenience even though it is simple, and thus a biometric authentication system that does not require an ID or a card has been desired.

In view of the above, a method of using multiple types of modalities to narrow down the search set with a first modality and identify the user with a second modality has been proposed. The modality indicates a type of biometric features, such as a fingerprint, vein, iris, face shape, palm shape, and the like. Therefore, the fingerprints and veins on the same finger are different modalities. Since it is inconvenient to input a plurality of modalities separately, a method of obtaining palm veins simultaneously with fingerprint input, a method of capturing a facial image at a time of palm vein input, and the like have been proposed.

According to a method of performing narrowing by face authentication and performing verification with palm veins, for example, an ID list of N people who are candidates for the face authentication is created, and 1:N authentication using palm veins is executed within the obtained set of the ID list to identify the user. Here, a plurality of faces may be imaged simultaneously depending on an installation condition of a camera for capturing a facial image and a usage condition of a user. For example, when faces of three people are obtained, the obtained ID list is for N × 3 people, which increases the verification time for the palm vein authentication. If the initially set N is the performance limit of the 1:N authentication of the palm vein authentication, the risk of acceptance of another person increases. However, when attempting to narrow down the number of people to 1/3 by the face authentication, the processing time for the face authentication may increase, which may cause a missing candidate (correct person may not be included in the narrowing-down list) depending on the accuracy of the face authentication.

In view of the above, the following embodiment aims to provide an information processing apparatus, an authentication method, and an authentication program capable of shortening an authentication time.

[First Embodiment]

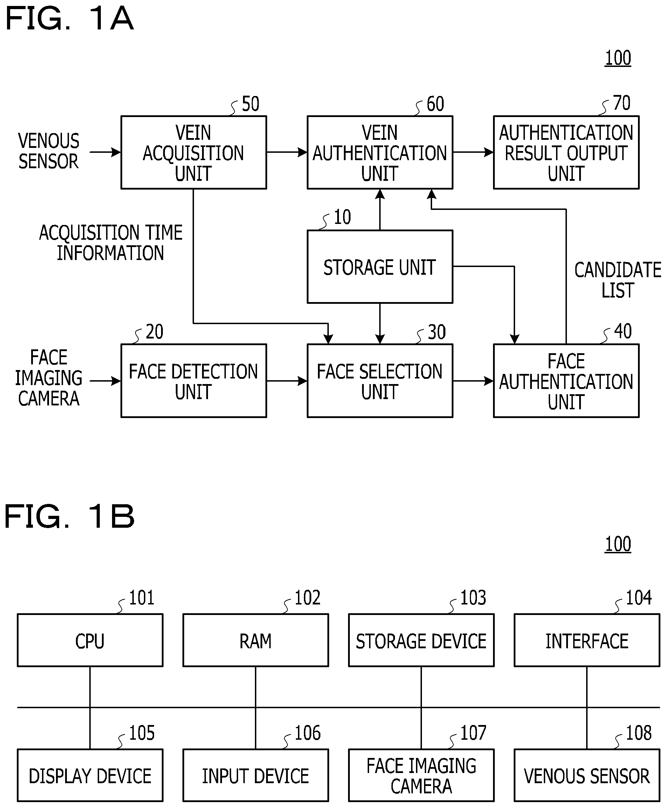

FIG. 1A is a block diagram exemplifying an overall configuration of an information processing apparatus 100. As exemplified in FIG. 1A, the information processing apparatus 100 functions as a storage unit 10, a face detection unit 20, a face selection unit 30, a face authentication unit 40, a vein acquisition unit 50, a vein authentication unit 60, an authentication result output unit 70, and the like.

FIG. 1B is a block diagram exemplifying a hardware configuration of the information processing apparatus 100. As exemplified in FIG. 1B, the information processing apparatus 100 includes a CPU 101, a RAM 102, a storage device 103, an interface 104, a display device 105, an input device 106, a face imaging camera 107, a venous sensor 108, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores an authentication program. The interface 104 is an interface device with an external device. For example, the interface 104 is an interface device with a local area network (LAN).

The display device 105 is a display device or the like such as a liquid crystal device (LCD). The input device 106 is an input device such as a keyboard, a mouse, or the like. The face imaging camera 107 is a metal oxide semiconductor (MOS) sensor, a charged coupled device (CCD) sensor, or the like. The venous sensor 108 includes a MOS sensor, a CCD sensor, and the like, and may also include near-infrared illuminator and the like.

With the CPU 101 executing the authentication program, the storage unit 10, the face detection unit 20, the face selection unit 30, the face authentication unit 40, the vein acquisition unit 50, the vein authentication unit 60, and the authentication result output unit 70 are implemented. Note that hardware such as a dedicated circuit may be used as the storage unit 10, the face detection unit 20, the face selection unit 30, the face authentication unit 40, the vein acquisition unit 50, the vein authentication unit 60, and the authentication result output unit 70.

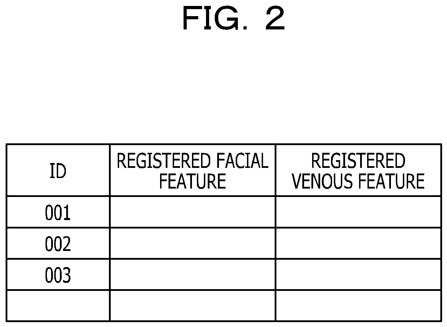

The storage unit 10 stores a plurality of types of biometric information of users registered in advance. Note that two different types of modalities are used as the plurality of types of biometric information in the present embodiment. In the present embodiment, as an example, facial features are stored as registered facial features in association with ID of each user, and venous features are further stored as registered venous features, as exemplified in FIG. 2.

In the present embodiment, the display device 105 displays operation information related to authentication. For example, the display device 105 displays content instructing a user to hold the palm over the venous sensor 108. When the user visually recognizes the operation information, the user inputs a palm image to the venous sensor 108 in accordance with the instruction. When the user inputs the palm image to the venous sensor 108, the face imaging camera 107 obtains an image including the face of the user. The display device 105 is oriented to the visible range of the user. Therefore, the face position of the user viewing the information displayed on the display device 105 is determined within an approximate range. Facial images within the range of the obtained image are selected and face authentication is executed, thereby narrowing down candidates for a person in question. Thereafter, vein authentication is performed on the narrowed-down candidates, thereby authenticating the person in question. Hereinafter, details will be described.

The face imaging camera 107 is installed at a place where the face of the user may be captured when the user visually recognizes the display content of the display device 105. For example, the face imaging camera 107 is installed above the display device 105 or the like.

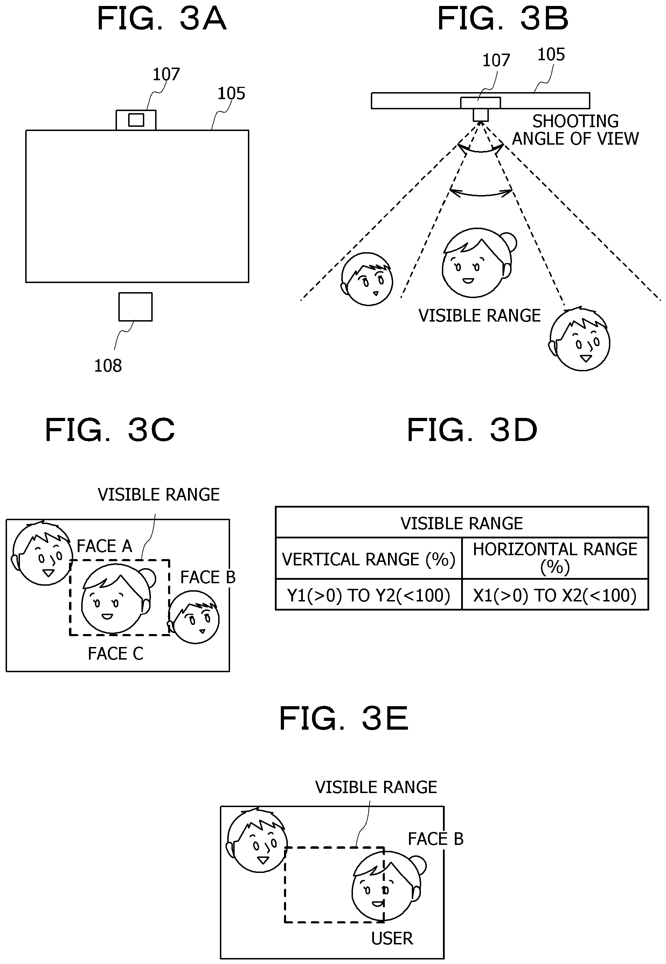

FIGs. 3A and 3B are diagrams exemplifying an installation location of the face imaging camera 107. FIG. 3A is a front view. FIG. 3B is a top view. In the examples of FIGs. 3A and 3B, the face imaging camera 107 is installed above the display device 105. The venous sensor 108 is installed below the display device 105 or the like. The shooting angle of view of the face imaging camera 107 is set to include the visible range of the display device 105 for the user. In this case, as exemplified in FIG. 3C, the visible range is included in the captured image obtained by the face imaging camera 107.

A hood or an anti-peeping film may be used as a method of limiting the visible angle range. The anti-peeping film limits a light emission direction of a display screen by arranging fine louvers (louver boards). Here, the visible range is preferably a range that may be visually recognized by one user. Since the visible range is limited by an angle, the area of the visible range becomes larger as the distance from the face imaging camera 107 becomes longer, which allows multiple users to visually recognize it. However, the user comes within reach of the input device 106 and the venous sensor 108 to perform key operation, vein input, and the like. The area of the visible range at that distance is preferably set to be approximately the size of one user.

The storage unit 10 stores information regarding the visible range in the captured image obtained by the face imaging camera 107. FIG. 3D is a diagram exemplifying the information regarding the visible range stored in the storage unit 10. The visible range is a partial area within the captured image. For example, it is set to the range from Y1 (> 0%) to Y2 (< 100%) with respect to the vertical axis of the captured image and the range from X1 (> 0%) to X2 (< 100%) with respect to the horizontal axis of the captured image, or the like. For example, it is assumed that the bottommost position of the vertical axis of the captured image is 0%, the topmost position is 100%, the leftmost position of the horizontal axis is 0%, and the rightmost position is 100%. By referring to the information of FIG. 3D, it becomes possible to determine the facial image to be selected in the captured image.

The user is not necessarily positioned exactly within the visible range as illustrated in FIG. 3C. The visual recognition is possible even from a position slightly shifted to the right or left as in FIG. 3E, and in this case, only an image with a partially lacked face is obtained when only the visible range is imaged, which interferes with the face authentication process. In view of the above, it is also possible to avoid a lack of the facial image by imaging a range wider than the visible range and selecting the detected face largest (having largest area) in the visible range.

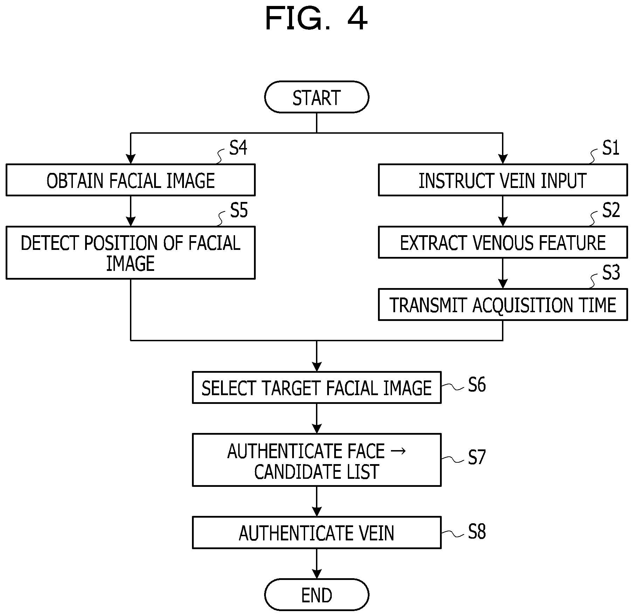

FIG. 4 is a flowchart illustrating an exemplary process of the information processing apparatus 100. As exemplified in FIG. 4, the vein acquisition unit 50 causes the display device 105 to display information associated with a vein input instruction (step S1). When the user visually recognizes the vein input instruction displayed on the screen of the display device 105, the user holds the palm over the venous sensor 108. Upon reception of a palm image from the venous sensor 108, the vein acquisition unit 50 extracts venous features from the palm image as venous features for verification (step S2). The vein acquisition unit 50 sends the time at which the palm image is obtained to the face selection unit 30 (step S3).

The following steps S4 and S5 are executed in parallel with steps S1 to S3. First, the face detection unit 20 obtains, from the face imaging camera 107, captured images within a predetermined time range including the time received in step S3 (step S4). This arrangement increases the accuracy in selecting the facial image of the user who holds the hand over the venous sensor 108.

Next, the face detection unit 20 obtains the visible range stored in the storage unit 10, thereby detecting a position of the facial image (step S5).

After executing steps S3 and S5, the face selection unit 30 selects a target facial image from the captured image (step S6). For example, if there is one facial image included in the visible range, the face selection unit 30 selects the facial image as a target. If there is a plurality of facial images included in the visible range, the detected facial image largest (having largest area) in the visible range is selected as a target.

Next, the face authentication unit 40 performs face authentication using the facial image selected in step S6 (step S7). First, the face authentication unit 40 extracts facial features from the facial image as facial features for verification. The facial features for verification used here are narrowing-down data with an emphasis on high-speed verification. The face authentication unit 40 collates the facial features for verification with the individual registered facial features, and obtains IDs associated with the registered facial features with a degree of similarity (narrowing-down score) to the facial features for verification equal to or higher than a threshold value. Through the process above, some of the IDs stored in the storage unit 10 may be narrowed down as a candidate list for the person in question.

Next, the vein authentication unit 60 collates the venous features for verification extracted in step S2 with the registered venous features associated with the IDs in the list for the person in question obtained in step S7 (step S8). When a degree of similarity (verification score) of one of the registered venous features to the venous features for verification is equal to or higher than a threshold value for determining the person in question, the authentication result output unit 70 outputs information associated with authentication success. When the verification score is less than the threshold value for determining the person in question, the authentication result output unit 70 outputs information associated with authentication failure. The information output from the authentication result output unit 70 is displayed on the display device 105.

According to the present embodiment, a target facial image is selected from a plurality of facial images based on positions of the respective plurality of facial images included in the captured image captured by the face imaging camera 107 in the captured image. Accordingly, it becomes possible to specify the face to be used for the narrowing-down processing, and to shorten the narrowing-down time without lowering the accuracy in the face authentication. As a result, it becomes possible to shorten the authentication time. Furthermore, since the face verification is carried out by selecting only a person to be authenticated, it becomes possible to exclude faces other than the face of the user from the verification target, which is effective in terms of privacy protection.

In the present embodiment, the storage unit 10 is an example of a storage unit that stores pieces of biometric information associated with the respective plurality of facial images. The venous feature for verification is an example of biometric information detected by a sensor. The face selection unit 30 is an example of a selection unit that selects one facial image from a plurality of facial images based on positions of the respective plurality of facial images included in the captured image captured by a camera in the captured image, and the face authentication unit 40 is an example of a specifying unit that refers to the storage unit for storing pieces of the biometric information associated with the respective plurality of facial images and specifies a piece of the biometric information associated with the facial image with the degree of similarity to the selected facial image satisfying a criterion. The vein authentication unit 60 is an example of an authentication unit that performs, upon reception of the biometric information detected by the sensor, authentication based on verification of the specified biometric information against the received biometric information. Furthermore, the vein authentication unit 60 is an example of the authentication unit that executes an authentication process based on verification of registered biometric information against the biometric information detected by the sensor. Furthermore, the face selection unit 30 and the face authentication unit 40 are examples of a determination unit that determines, when a face image is included in the captured image captured by the camera, whether or not to use, as a target to be collated with the detected biometric information, a piece of the biometric information associated with the facial image with the degree of similarity to the facial image satisfying the criterion among the registered pieces of biometric information based on the position of the facial image in the captured image.

(First Variation)

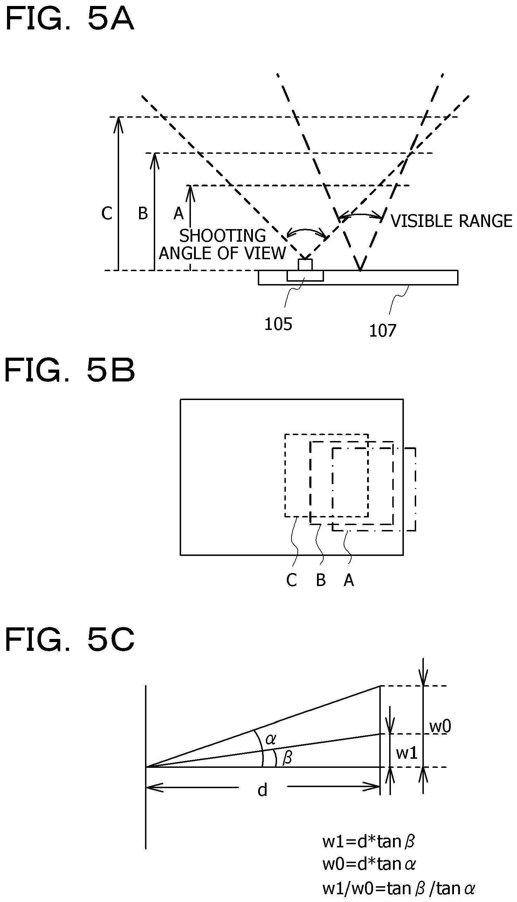

It is difficult to arrange the display device 105 and the face imaging camera 107 coaxially (having the same central position and having the same orientation). Therefore, it is common to install the face imaging camera 107 at a location away from the screen center of the display device 105. For example, in a case where it is installed on the upper side of the screen slightly shifted from the center in the horizontal direction as exemplified in FIG. 5A, the area corresponding to the visible range is to be at a position shifted according to a distance as exemplified in FIG. 5B. In view of the above, the distance from the face imaging camera 107 to the face may be detected, and the position of the determination area may be finely adjusted.

An area difference between the imaging range and the visible range is caused by a difference between the shooting angle of view and the visible angle. For example, as exemplified in FIG. 5C, in a case where the shooting angle of view is set to $2 \times \alpha$ and the visible angle is set to $2 \times \beta$, the imaging range at a position separated by a distance d may be expressed by the following equation (1).

$$2 \times w0 = d \times \tan\alpha \times 2 \quad (1)$$

The width of the visible range may be expressed by the following equation (2).

$$2 \times w1 = d \times \tan\beta \times 2 \quad (2)$$

Further, w1 relative to w0 may be expressed by the following equation (3).

$$w1/w0 = \tan\beta/\tan\alpha \quad (3)$$

From the above, the relative size of the area of the visible range within the imaging range is constant regardless of the distance. In other words, when the display device 105 and the face imaging camera 107 are coaxial, it may be considered that the visible range within the imaging range remains unchanged. Technically, since the size of the display area is superimposed as an offset, the area is larger as the distance is closer, and is smaller as the distance is farther. Even when the display device 105 and the face imaging camera 107 are not coaxial, the area size relationship is the same as in the coaxial case. When they are not coaxial, the position of the area is shifted depending on the distance. A shift amount is determined by a positional difference, an optical axis difference, and a distance between the display device 105 and the face imaging camera 107. It may be difficult to precisely know an installation angle of something whose angle may be easily changed, such as a web camera, while it may be obtained by calculation when the difference in position and angle is known. In such a case, it may be checked by a method in which a projector screen or the like having high diffuse reflectivity is placed in front of the display screen to be observed by the face imaging camera 107, and an area that looks brighter is obtained.

While a distance sensor using ultrasonic waves or light may be installed to detect the distance, it leads to an increase in device cost and restrictions on installation conditions. In view of the above, the distance may be determined informally based on the size of the face. For example, a reference size is held in advance, and the distance is shorter when the face is larger than the reference while the distance is longer when the face is smaller than the reference. The informal distance determination is sufficient due to the fact that the determination of the area does not depend on whether the face is strictly within the area and that, in visual field restriction using louvers, the area boundary is blurred as the amount of light gradually decreases near the boundary, not suddenly disappears at a certain angle.

(Second Variation)

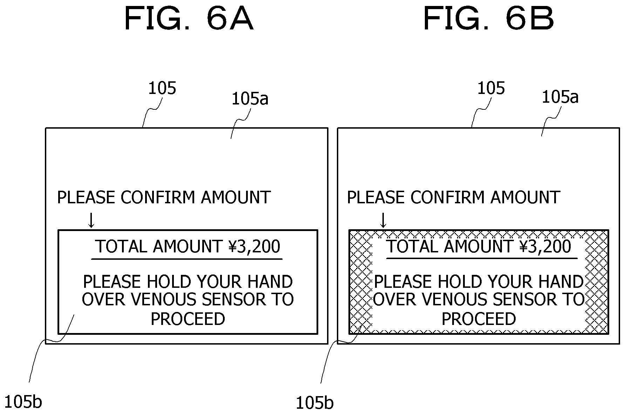

The visual field restriction may be provided for, instead of the entire screen of the display device 105, only a partial area for displaying operation information related to authentication. For example, angular limitation is set in such a manner that only a part of the screen that may be viewed from a wide range may be viewed from the front (or a specific direction). For example, as exemplified in FIG. 6A, only a partial area 105b may be subject to the visual field restriction in a screen 105a of the display device 105. In the example of FIG. 6A, the area 105b is viewed from the visible range. As in FIG. 6A, the operation information is easy to see in the area 105b. FIG. 6B is a diagram in which the area 105b is viewed from outside the visible range. As in FIG. 6B, it is difficult to see the operation information in the area 105b.

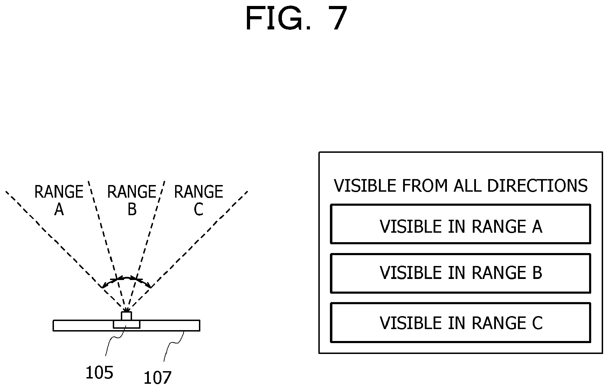

Alternatively, in a case where only one person is detected in the imaging range, an instruction is displayed on the normal screen to execute the authentication. However, in a case where a plurality of faces is detected in the imaging range, the instruction display may be output in a range that may be viewed from a wide range first, and a face moved to a limited area in accordance with the instruction and detected may be used as a user. Moreover, as exemplified in FIG. 7, partial visible ranges may be assigned in different directions. For example, in the case where only one person is detected in the imaging range, it may be displayed in the visible area in the direction that corresponds to the detected position. In the example of FIG. 7, a range A, a range B, and a range C are assigned in different directions. First, the display is output in the visible area that may be viewed from a wide range, the range A is set as the visible range, then the range B is set as the visible range, and then the range C is set as the visible range. With this arrangement, the user moves along with the switching of the visible range. The face that has moved may be used for the face authentication.

[Second Embodiment]

While the facial image to be used for the face authentication is selected according to the position in the image obtained by the face imaging camera 107 in the first embodiment, it is not limited to this. The facial image to be used for the face authentication may be selected according to the position of the operation information displayed on the display device 105.

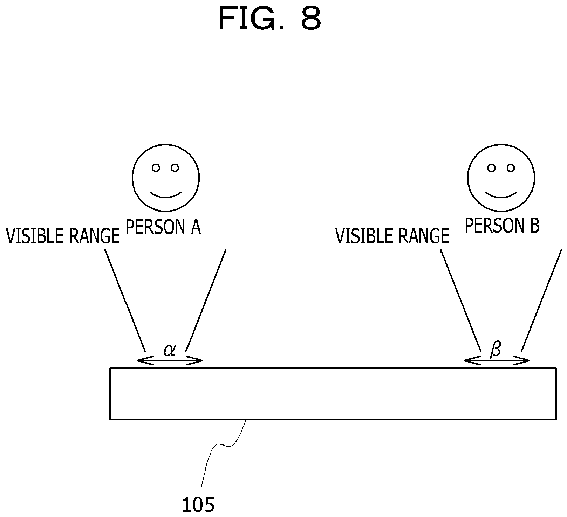

As exemplified in FIG. 8, a vein acquisition unit 50 designates a position of operation information of a venous sensor 108 on a screen of a display device 105, and causes the display device 105 to display it. In a case where the display device 105 has a large screen, a user is caused to move to a position where the user can view the information depending on the position of the information displayed on the screen of the display device 105.

For example, in a case where a message "please hold your hand over the venous sensor" is displayed in an area a of the screen of the display device 105, only a person A may see the message (person B may not see it), and thus only a facial image of the person A is to be authenticated. On the other hand, in a case where the message is displayed in an area β of the screen of the display device 105, only the person B may see the message (person A may not see it), and thus only a face of the person B is to be authenticated.

A face selection unit 30 selects a facial image located in a positional range corresponding to a display position of the display device 105 in an image obtained by a face imaging camera 107 within a predetermined time range including time at which a venous image is extracted. After the facial image is selected, it is sufficient if a process similar to that in the first embodiment is performed.

In the present embodiment, the face selection unit 30 is an example of a selection unit that selects, when a plurality of facial images is included in a captured image captured by a camera, one facial image from the plurality of facial images based on a display position of operation information on a display unit that displays the operation information related to authentication. A vein authentication unit 60 is an example of an authentication unit that performs authentication using the facial image selected by the selection unit.

While the embodiments of the present invention have been described above in detail, the present invention is not limited to such specific embodiments, and various modifications and alterations may be made within the scope of the present invention described in the claims.

REFERENCE SIGNS LIST

| | |
|---|---|
| 10 | Storage unit |
| 20 | Face detection unit |
| 30 | Face selection unit |
| 40 | Face authentication unit |
| 50 | Vein acquisition unit |
| 60 | Vein authentication unit |
| 70 | Authentication result output unit |
| 100 | Information processing apparatus |
| 105 | Display device |
| 107 | Face imaging camera |
| 108 | Venous sensor |

**Claims**

1. An authentication method for a computer to execute a process comprising:

   obtaining a captured image captured by a camera;
   selecting one facial image from a plurality of facial images based on a position of each of the plurality of facial images included in the captured image;
   refers to a storage unit that stores pieces of biometric information associated with the respective plurality of facial images and specifies a piece of the biometric information associated with a facial image in which a degree of similarity to the selected facial image satisfies a criterion; and
   performs, when biometric information detected by a sensor is received, authentication based on verification of the specified piece of the biometric information against the received biometric information.

2. The authentication method according to claim 1, the method causing the computer to execute the process further comprising: selecting the facial image from the captured image captured by the camera within a predetermined time range that includes time at which the biometric information is detected by the sensor.

3. The authentication method according to claim 1 or 2, the method causing the computer to execute the process further comprising: storing a relationship between the captured image captured by the camera and a predetermined positional range in the captured image, and selecting the facial image included in the positional range.

**4.** The authentication method according to claim 3, the method causing the computer to execute the process further comprising: causing a display device to display operation information related to the authentication, wherein
the predetermined positional range includes a range determined based on a visible range of the operation information on the display device.

**5.** The authentication method according to claim 4, wherein

the display device has visual field restriction on a part of a screen,
the method causing the computer to execute the process further comprising: displaying the operation information on the part of the screen.

**6.** The authentication method according to claim 5, wherein a plurality of visible angle ranges is set in different directions on the part of the screen.

**7.** The authentication method according to any one of claims 1 to 6, the method causing the computer to execute the process further comprising: selecting the facial image from the captured image in consideration of a distance from the camera to a subject.

**8.** An authentication method that executes authentication based on verification of registered pieces of biometric information against biometric information detected by a sensor, the method causing a computer to execute a process comprising:
in a case where a captured image captured by a camera includes a facial image, determining whether or not to use, among the registered pieces of biometric information, a piece of the biometric information associated with a facial image in which a degree of similarity to the facial image satisfies a criterion as a target of the verification against the detected biometric information based on a position of the facial image in the captured image.

**9.** The authentication method according to claim 8, the method causing the computer to execute the process further comprising: determining whether or not to use, among the registered pieces of biometric information, the piece of the biometric information associated with the facial image in which the degree of similarity to the facial image satisfies the criterion as the target of the verification against the detected biometric information based on the position of the facial image in the captured image included in the captured image captured by the camera within a predetermined time range that includes time at which the biometric information is detected by the sensor.

**10.** The authentication method according to claim 8 or 9, the method causing the computer to execute the process further comprising: storing a relationship between the captured image captured by the camera and a predetermined positional range in the captured image, and in a case where the facial image is included in the predetermined positional range, determining whether or not to use, among the registered pieces of biometric information, the piece of the biometric information associated with the facial image in which the degree of similarity to the facial image satisfies the criterion as the target of the verification against the detected biometric information.

**11.** The authentication method according to claim 10, the method causing the computer to execute the process further comprising: causing a display device to display operation information related to the authentication, wherein
the predetermined positional range includes a range determined based on a visible range of the operation information on the display device.

**12.** The authentication method according to claim 11, wherein

the display device has visibility restriction on a part of a screen,
the method causing the computer to execute the process further comprising: displaying the operation information on the part of the screen.

**13.** The authentication method according to claim 12, wherein a plurality of visible angle ranges is set in different directions on the part of the screen.

**14.** An authentication method for causing a computer to execute a process comprising:

obtaining a captured image captured by a camera;
in a case where the obtained captured image includes a plurality of facial images, selecting one facial image from the plurality of facial images based on a display position of operation information on a display unit that displays the operation information related to authentication; and
performing the authentication by using the selected facial image.

**15.** An information processing apparatus comprising:

a selection unit that selects one facial image from a plurality of facial images based on a position of each of the plurality of facial images included in a captured image captured by a camera in the captured image;

a specifying unit that refers to a storage unit that stores pieces of biometric information associated with the respective plurality of facial images and specifies a piece of the biometric information associated with a facial image in which a degree of similarity to the selected facial image satisfies a criterion; and

an authentication unit that performs, when biometric information detected by a sensor is received, authentication based on verification of the specified piece of the biometric information against the received biometric information.

16. An information processing apparatus comprising:

an authentication unit that executes authentication based on verification of registered pieces of biometric information against biometric information detected by a sensor; and

a determination unit that, in a case where a captured image captured by a camera includes a facial image, determines whether or not to use, among the registered pieces of biometric information, a piece of the biometric information associated with a facial image in which a degree of similarity to the facial image satisfies a criterion as a target of the verification against the detected biometric information based on a position of the facial image in the captured image.

17. An information processing apparatus comprising:

a selection unit that, in a case where a captured image obtained by a camera includes a plurality of facial images, selects one facial image from the plurality of facial images based on a display position of operation information on a display unit that displays the operation information related to authentication; and

an authentication unit that performs the authentication by using the selected facial image.

18. An authentication program for causing a computer to execute a process comprising:

obtaining a captured image captured by a camera;

selecting one facial image from a plurality of facial images based on a position of each of the plurality of facial images included in the captured image;

refers to a storage unit that stores pieces of biometric information associated with the respective plurality of facial images and specifies a piece of the biometric information associated with a facial image in which a degree of similarity to the selected facial image satisfies a criterion; and

performs, when biometric information detected by a sensor is received, authentication based on verification of the specified piece of the biometric information against the received biometric information.

19. An authentication program that executes authentication based on verification of registered pieces of biometric information against biometric information detected by a sensor, the program causing a computer to execute a process comprising:

in a case where a captured image captured by a camera includes a facial image, determining whether or not to use, among the registered pieces of biometric information, a piece of the biometric information associated with a facial image in which a degree of similarity to the facial image satisfies a criterion as a target of the verification against the detected biometric information based on a position of the facial image in the captured image.

20. An authentication method for causing a computer to execute a process comprising:

obtaining a captured image captured by a camera;

in a case where the obtained captured image includes a plurality of facial images, selecting one facial image from the plurality of facial images based on a display position of operation information on a display unit that displays the operation information related to authentication; and

performing the authentication by using the selected facial image.

# FIG. 1A

100

VENOUS SENSOR → VEIN ACQUISITION UNIT `50` → VEIN AUTHENTICATION UNIT `60` → AUTHENTICATION RESULT OUTPUT UNIT `70`

ACQUISITION TIME INFORMATION

STORAGE UNIT `10`

CANDIDATE LIST

FACE IMAGING CAMERA → FACE DETECTION UNIT `20` → FACE SELECTION UNIT `30` → FACE AUTHENTICATION UNIT `40`

# FIG. 1B

100

| CPU `101` | RAM `102` | STORAGE DEVICE `103` | INTERFACE `104` |

| DISPLAY DEVICE `105` | INPUT DEVICE `106` | FACE IMAGING CAMERA `107` | VENOUS SENSOR `108` |

# FIG. 2

| ID | REGISTERED FACIAL FEATURE | REGISTERED VENOUS FEATURE |
|---|---|---|
| 001 | | |
| 002 | | |
| 003 | | |
| | | |

# FIG. 3A

107
105

108

# FIG. 3B

107  105

SHOOTING
ANGLE OF VIEW

VISIBLE RANGE

# FIG. 3C

VISIBLE RANGE

FACE A

FACE B

FACE C

# FIG. 3D

| VISIBLE RANGE | |
|---|---|
| VERTICAL RANGE (%) | HORIZONTAL RANGE (%) |
| Y1(>0) TO Y2(<100) | X1(>0) TO X2(<100) |

# FIG. 3E

VISIBLE RANGE

FACE B

USER

# FIG. 4

```
                        ┌─────────┐
                        │  START  │
                        └────┬────┘
            ┌────────────────┴────────────────┐
            │                                 │
            ▼  S4                             ▼  S1
  ┌──────────────────────┐        ┌──────────────────────┐
  │  OBTAIN FACIAL IMAGE  │        │  INSTRUCT VEIN INPUT  │
  └──────────┬───────────┘        └──────────┬───────────┘
             │  S5                            │  S2
  ┌──────────▼───────────┐        ┌──────────▼───────────┐
  │ DETECT POSITION OF   │        │ EXTRACT VENOUS FEATURE│
  │    FACIAL IMAGE      │        └──────────┬───────────┘
  └──────────┬───────────┘                   │  S3
             │                    ┌──────────▼───────────┐
             │                    │ TRANSMIT ACQUISITION  │
             │                    │        TIME           │
             │                    └──────────┬───────────┘
             └────────────┬──────────────────┘
                          ▼
          ┌──────────────────────────────┐
          │   SELECT TARGET FACIAL IMAGE  │  S6
          └───────────────┬──────────────┘
                          ▼
          ┌──────────────────────────────┐
          │   AUTHENTICATE FACE →          │  S7
          │   CANDIDATE LIST               │
          └───────────────┬──────────────┘
                          ▼
          ┌──────────────────────────────┐
          │       AUTHENTICATE VEIN        │  S8
          └───────────────┬──────────────┘
                          ▼
                     ┌─────────┐
                     │   END   │
                     └─────────┘
```

# FIG. 5A

SHOOTING
ANGLE OF VIEW

VISIBLE RANGE

C  B  A

105        107

# FIG. 5B

C   B   A

# FIG. 5C

α
β

d

w0

w1

w1=d*tan β
w0=d*tan α
w1/w0=tan β /tan α

# FIG. 6A

105    105a

PLEASE CONFIRM AMOUNT
↓

TOTAL AMOUNT ¥3,200

PLEASE HOLD YOUR HAND
OVER VENOUS SENSOR TO
PROCEED

105b

# FIG. 6B

105    105a

PLEASE CONFIRM AMOUNT
↓

TOTAL AMOUNT ¥3,200

PLEASE HOLD YOUR HAND
OVER VENOUS SENSOR TO
PROCEED

105b

# FIG. 7

RANGE A | RANGE B | RANGE C

105   107

| VISIBLE FROM ALL DIRECTIONS |
|---|
| VISIBLE IN RANGE A |
| VISIBLE IN RANGE B |
| VISIBLE IN RANGE C |

# FIG. 8

VISIBLE RANGE  PERSON A          VISIBLE RANGE  PERSON B

$\alpha$                              $\beta$

105

## INTERNATIONAL SEARCH REPORT

| International application No. |
|---|
| PCT/JP2020/019108 |

**A. CLASSIFICATION OF SUBJECT MATTER**
Int. Cl. G06F21/32(2013.01)i
FI: G06F21/32

According to International Patent Classification (IPC) or to both national classification and IPC

**B. FIELDS SEARCHED**

Minimum documentation searched (classification system followed by classification symbols)
Int. Cl. G06F21/32

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-116353 A (KOCHI SHINKIN BANK) 26 July 2018, paragraphs [0050]-[0055], fig. 3, paragraphs | 1-4, 7-11, 15-16, 18-19 |
| A | [0050]-[0055], fig. 3 | 5-6, 12-13 |
| Y | JP 2007-72861 A (OMRON CORP.) 22 March 2007, paragraphs [0022]-[0028], [0036]-[0046], | 1-4, 7-11, 15-16, 18-19 |
| A | paragraphs [0022]-[0028], [0036]-[0046] | 5-6, 12-13 |
| Y | JP 2004-62846 A (WAIMACHIKKU KK) 26 February 2004, | 2-4, 7, 9-11 |
| A | abstract, abstract | 5-6, 12-13 |
| X | JP 2018-197980 A (SHARP CORP.) 13 December 2018, abstract | 14, 17, 20 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30.07.2020 | 11.08.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application No.

PCT/JP2020/019108

| Patent Documents referred to in the Report | Publication Date | Patent Family | Publication Date |
|---|---|---|---|
| JP 2018-116353 A | 26.07.2018 | (Family: none) | |
| JP 2007-72861 A | 22.03.2007 | (Family: none) | |
| JP 2004-62846 A | 26.02.2004 | (Family: none) | |
| JP 2018-197980 A | 13.12.2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019128880 A